## Europäisches Patentamt
## European Patent Office
## Office européen des brevets

(19)

(11) Veröffentlichungsnummer : **0 007 027**
B2

(12) ## NEUE EUROPÄISCHE PATENTSCHRIFT

(45) Veröffentlichungstag der neuen Patentschrift :
01.10.86

(21) Anmeldenummer : 79102089.4

(22) Anmeldetag : 25.06.79

(51) Int. Cl.⁴ : **B 01 J 31/12**, C 08 F 4/52,
C 08 F 36/04

(54) Lösungspolymerisation von konjugierten Dienen.

(30) Priorität : 08.07.78 DE 2830080

(43) Veröffentlichungstag der Anmeldung :
23.01.80 Patentblatt 80/02

(45) Bekanntmachung des Hinweises auf die Patenterteilung : 15.12.82 Patentblatt 82/50

(45) Bekanntmachung des Hinweises auf die Entscheidung über den Einspruch : 01.10.86 Patentblatt 86/40

(84) Benannte Vertragsstaaten :
BE DE FR GB IT NL

(56) Entgegenhaltungen :
DE-A- 1 812 935
DE-A- 2 011 543
GB-A- 1 061 002
US-A- 3 297 667
US-A- 3 641 188
US-A- 3 794 604
Scientia Sinica, Vol XVII, No. 5 (Oktober 1974), 656-663
Die Akte enthält technische Angaben, die nach dem Eingang der Anmeldung eingereicht wurden und die nicht in dieser Patentschrift enthalten sind.

(73) Patentinhaber : BAYER AG
Konzernverwaltung RP Patentabteilung
D-5090 Leverkusen 1 Bayerwerk (DE)

(72) Erfinder : Sylvester, Gerd, Dr.
Im Buchenhain 1
D-5090 Leverkusen 1 (DE)
Erfinder : Witte, Josef, Dr.
Haferkamp 10
D-5000 Köln 80 (DE)
Erfinder : Marwede, Günter, Dr.
Am Portzenacker 24
D-5000 Köln 80 (DE)

EP 0 007 027 B2

## Beschreibung

Die Erfindung betrifft ein Verfahren zur Polymerisation von konjugierten Dienen insbesondere Butadien in Lösung zu Polymerisaten mit guter Konfektionsklebrigkeit mit einem Mehrkomponenten-Katalysator.

Polybutadien mit einem hohen Anteil an cis-1,4-Einheiten wird bereits seit längerer Zeit in großtechnischem Maßstab produziert und für die Herstellung von Reifen und anderen Gummiwaren verwendet. Die dabei eingesetzten metallorganischen Mischkatalysatoren enthalten als Übergangsmetallkomponente Titan-, Kobalt- oder Nickelverbindungen. Gegenüber Naturkautschuk besitzt das mit diesen Katalysatoren hergestellte Polybutadien u. a. den Nachteil einer geringen Konfektionsklebrigkeit.

Es sind zwar Katalysatoren zur Herstellung von Polybutadien mit einer verbesserten Konfektionsklebrigkeit bekannt, doch weisen diese andere gravierende Nachteile auf, die eine technische Anwendung verhindert haben.

So wird z. B. in einer Veröffentlichung, erschienen in « Kautschuk und Gummi, Kunststoffe », 22. Jahrgang, Nr. 6/1969, Seite 293 ff., ein Katalysator beschrieben, mittels dessen Polybutadien hergestellt werden kann, welches eine gute Konfektionsklebrigkeit besitzt. Das dort beschriebene Katalysatorsystem besteht aus

1. einem Aluminiumalkyl oder Alkylaluminiumhydrid,
2. Ceroctoat, und
3. einer Halogenidverbindung.

Die verwendete Cer-Verbindung hat den Nachteil, daß sie in den zur Herstellung des Katalysators und zur Polymerisation von Butadien geeigneten Lösungsmitteln sehr wenig löslich ist. Ebenso bildet der fertige Katalysator keine homogene Lösung. Es ist daher schwierig, sowohl die Cer-Verbindung als auch den daraus hergestellten Katalysator in einem technischen Verfahren präzise zu dosieren, was für die gleichmäßige Reaktionsführung und gleichbleibende Produkteigenschaften von großer Bedeutung ist. Außerdem neigen heterogene Katalysatoren bei der Lösungspolymerisation von Dienen in starkem Maße zu unerwünschter Gelbildung, die zur Verkrustung von Reaktionsgefäßen und Rührern sowie zum Verstopfen von Rohrleitungen führen kann, so daß der Produktionsprozeß in einer technischen Anlage erheblich gestört werden würde.

In der gleichen Publikation wird auf Seite 297, 2. Spalte, 3. Zeile erwähnt, daß wahrscheinlich auch andere Metalle der Seltenen Erden Katalysatoren mit ähnlichen Eigenschaften bilden.

Die Verwendung von Verbindungen der Seltenen Erden als Bestandteil von metallorganischen Mischkatalysatoren für Polymerisationsreaktionen ist tatsächlich seit langem bekannt. So wird z. B. in der US-A-3 118 864 u. a. ein Katalysator für die Polymerisation von Butadien, Isopren oder Chloropren beansprucht, der durch Reaktion von einem Ester oder Halogenid des Cers mit einer metallorganischen Verbindung, die wenigstens eine Metall-Kohlenstoffbindung besitzt, gebildet wird.

Ein anderer Katalysator, der für die stereospezifische Polymerisation von Dienen geeignet ist, wird in der DE-B-1 302 264 beschrieben. Er besteht aus

a) einem Chelatohalogenid eines Metalls der Gruppe IIIB des Periodensystems der Elemente, und

b) einem Aluminiumtrialkyl oder Alkylaluminiumhydrid.

Erwähnt werden in dieser Patentschrift auch solche Katalysatoren, die aus

a) einem löslichen Chelat eines Metalls der Gruppe IIIB,

b) einem Alkylaluminiumhalogenid, und

c) einem Aluminiumtrialkyl oder Alkylaluminiumhydrid hergestellt werden.

Alle dort beschriebenen Katalysatoren besitzen ebenfalls die bereits geschilderten Nachteile : sie bestehen aus Feststoffen, die sowohl im Monomeren als auch in solchen Lösungsmitteln, die für eine Polymerisation von Dienen geeignet sind, nicht gelöst werden.

In dieser Schrift wird daher auch darauf hingewiesen (Spalte 7, Zeilen 16-20), daß bei der Polymerisation in organischen Lösungsmitteln das Polymere « in gequollenem, zusammengeballten Zustand » anfällt.

Derartige Produkte besitzen keine guten kautschuktechnologischen Eigenschaften, so daß mit diesen Katalysatoren die Polymerisation in Masse bevorzugt wird. Für ein großtechnisches Verfahren ist jedoch die Verwendung eines inerten Lösungsmittels erwünscht, damit die bei der Polymerisation freiwerdende Wärme besser abgeführt werden kann.

Ebenso beschreibt die DE-A-1 812 935 einen Katalysator zur Polymerisation von Di-olefinen bestehend aus (1) einer Alkylaluminium- und/oder einer Alkylaluminium-hydridverbindungen, (2) einer metallorganischen Verbindung mit einem Metallatom der Gruppe III-B und (3) einer aluminiumorganischen Fluoridverbindung. Dieser Katalysator hat auch den Nachteil, daß die Komponente (2) in Lösungsmitteln sehr wenig löslich ist.

Diese Unlöslichkeit führt zu Problemen sowohl bei der Katalysatorherstellung, wenn man ihn altern läßt, als auch bei der Direktzugabe in das Polymerisationssystem, da es schwierig ist, die Katalysatorkomponente präzise zuzudosieren, was für eine gleichmäßige Reaktionsführung notwendig ist.

Bei Beschreibungsseite 6, Zeile 9 der DE-A beschreibt Neodymoctanoat als repräsentative Verbindung der Katalysatorkomponente 2. Die gleiche Verbindung kann als erfindungsgemäße Teilkomponente der Katalysatorkomponente A eingesetzt werden. Wie aus Beispiel 1 der Erfindung hervorgeht, ist dieses Produkt in Cyclohexan nicht löslich. Die Löslichkeit wird erst dann herbeigeführt, wenn man Triethylaluminium, ein Trialkylaluminiumprodukt, zusetzt und mit Neodymoctanuat reagieren läßt.

Aufgabe der Erfindung ist es daher, ein Verfahren für die Polymerisation von konjungierten Dienen, besondere Butadien bereitzustellen, durch das Kautschuke mit guten kautschuktechnologischen Eigenschaften, insbesondere hoher Konfektionsklebrigkeit, hergestellt werden können.

Sämtliche der Polymerisationslösung zugefügten Katalysatorkomponenten müssen in einem inerten Lösungsmittel löslich sein.

Weiterhin sollte der verwendete Katalysator bereits in geringen Mengen eine sehr hohe Aktivität für die Polymerisation von Dienen besitzen.

Es wurde nun ein Verfahren zur Polymerisation von konjugierten Dienen gefunden, das die gestellte Aufgabe löst, dadurch gekennzeichnet, daß ein Katalysator, bestehend aus

A) einem kohlenwasserstofflöslichen Reaktionsgemisch der Umsetzung eines Carboxylates der Seltenen Erden $M(RCO_2)_3$ mit einem Aluminiumtrialkyl $AlR^1_3$,

B) einem Aluminiumtrialkyl $AlR^2_3$, und/oder einem Alkylaluminiumhydrid $HAlR^2_2$,

C) einer Lewissäure

wobei

M ein dreiwertiges Element der Seltenen Erden mit den Ordnungszahlen 57 bis 71,

R einen gesättigten oder ungesättigten geradkettigen oder verzweigten Alkylrest mit 1 bis 20 C-Atomen, der einfach oder mehrfach mit Cyclo-alkyl mit 5 bis 7 C-Atomen und/oder Phenyl substituiert sein kann, wobei die Carboxylgruppe an ein primäres, sekundäres oder tertiäres C-Atom gebunden ist, einen Cycloalkylrest mit 5 bis 7 Ring-C-Atomen, der gegebenenfalls einfach oder mehrfach mit Alkylgruppen mit 1 bis 5 C-Atomen substituiert ist oder einen aromatischen Rest mit 6 bis 10 Ring-C-Atomen, der einfach oder mehrfach mit Alkylgruppen mit 1 bis 5 C-Atomen substituiert sein kann, und

$R^1$ und $R^2$ gleich oder verschieden einen geradkettigen oder verzweigten Alkylrest mit 1 bis 10-C-Atomen bedeuten und das Molverhältnis $M(RCO_2)_3$ zur Summe von $AlR^1_3$, $AlR^2_3$ und $HAlR^2_2$ 1 : 2 bis 1 : 100 sowie das Molverhältnis der Komponente A, bezogen auf $M(RCO_2)_3$, zur Komponente C 1 : 0,4 bis 1 : 15 betragen, verwendet wird.

Die Carboxylate der Metalle der Seltenen Erden sind in Kohlenwasserstoffen sehr wenig löslich ; zum Teil bilden sie selbst bei großer Verdünnung hochviskose gequollene Massen, die eine exakte Dosierung unmöglich machen. Es ist überraschend, daß man diese Verbindungen durch Reaktion mit geringen Mengen an Trialkylaluminium in kohlenwasserstofflösliche Umsetzungsprodukte überführen kann, da andere Verbindungen der Seltenen Erden, wie z. B. die 8-Oxichinolinate, die gemäß DE-B-1 302 264 als Katalysatorkomponente vorgeschlagen werden, auch durch große Mengen an Aluminiumalkyl nicht gelöst werden können.

Bevorzugt werden solche Katalysatoren, in denen M Lanthan, Cer, Praseodym oder Neodym bzw. ein Gemisch von Elementen der Seltenen Erden, welches mindestens eines der Elemente Lanthan, Cer, Praseodym oder Neodym zu wenigstens 10 Gew.-% enthält, bedeutet.

Besonders bevorzugt werden Verbindungen, in denen M Lanthan oder Neodym bzw. ein Gemisch von Seltenen Erden, welches Lanthan oder Neodym zu mindestens 30 Gew.-% enthält, bedeutet.

Als Beispiele für Säuren, aus deren sich der Carboxylrest $RCO_2$ ableitet, seien folgende Carbonsäuren genannt : Essigsäure, Propionsäure, n-Buttersäure, Iso-Buttersäure, Valeriansäure, Pivalinsäure, Hexancarbonsäure-1, Hexancarbonsäure-2, Methyldiäthylessigsäure, Heptancarbonsäure-1, Heptancarbonsäure-3,2-Methylhexancarbonsäure-2, Triäthylessigsäure, Octancarbonsäure-1,2-Äthylhexansäure, Nonancarbonsäure-1, Laurinsäure, Myristinsäure, Palmitinsäure, Stearinsäure, Ölsäure, Benzoesäure, Phenylessigsäure, Triphenylessigsäure und Tricyclohexylessigsäure.

Der Carboxylrest $RCO_2$ kann sich auch aus technischen Säuregemischen ableiten.

Beispiele für geeignete Carboxylate der Seltenen Erden sind :

Lanthanpropionat, Lanthandiäthylacetat, Lanthan-2-äthylhexanoat, Lanthanstearat, Lanthanbenzoat, Cerbenzoat, Praseodympropionat, Praseodymcyclohexancarboxylat, Praseodym-2-äthylhexanoat, Neodymdiäthylacetat, Neodym-2-äthylhexanoat, Neodymcyclohexancarboxylat, Neodymstearat, Neodymoleat, Neodymbenzoat.

Beispiele für geeignete Aluminiumalkyle $AlR^1_3$ sind.

Trimethylaluminium,
Triäthylaluminium,
Tri-n-propylaluminium,
Triisopropylaluminium,
Tri-n-butylaluminium,
Triisobutylaluminium,
Tripentylaluminium,
Trihexylaluminium,
Tricyclohexylaluminium,
Trioctylaluminium.

Bevorzugt werden Triäthylaluminium und Triisobutylaluminium.

Besonders bevorzugt wird Triäthylaluminium.

Das als Komponente B eingesetzte Aluminiumalkyl $AlR^2_3$ kann gleich oder verschieden dem bei der Herstellung der Katalysatorkomponente A verwendeten Aluminiumalkyl sein Geeignet sind alle dort genannten Verbindungen $AlR^1_3$. Der Rest $R^2$ hat daher die gleiche Bedeutung wie der Rest $R^1$, auch im Falle von $HAlR^2_2$. Bevorzugt werden Triäthylaluminium und Triisobutylaluminium.

Als Komponente C werden sogenannte Lewissäuren eingesetzt.

Beispielhaft seien als Komponente C Organometallhalogenide erwähnt, in denen das Metallatom der Gruppe 3a) oder 4a) und 5a) angehört sowie Halogenide der Elemente der 3a), 4a) und 5a) Hauptgruppe des Periodensystems, wie es im « Handbook of Chemistry and Physics », 45th Edition 1964-85 dargestellt ist :

Methylaluminiumdibromid
Methylaluminiumdichlorid
Äthylaluminiumdibromid
Äthylaluminiumdichlorid
Butylaluminiumdibromid
Butylaluminiumdichlorid
Dimethylaluminiumbromid
Dimethylaluminiumchlorid
Diäthylaluminiumbromid
Diäthylaluminiumchlorid
Dibutylaluminiumbromid
Dibutylaluminiumchlorid
Methylaluminiumsesquibromid
Methylaluminiumsesquichlorid
Äthylaluminiumsesquibromid
Äthylaluminiumsesquichlorid
Dibutylzinndichlorid
Aluminiumtribromid
Antimontrichlorid
Antimonpentachlorid
Phosphortrichlorid
Phosphorpentachlorid
Zinntetrachlorid

Bevorzugt werden Diäthylaluminiumchlorid, Äthylaluminium-sesquichlorid, Äthylaluminiumdichlorid, Diäthylaluminiumbromid, Äthylaluminiumsesquibromid und Äthylaluminiumdibromid.

Die Katalysatorkomponente A kann hergestellt werden, indem man die Verbindung $M(RCO_2)_3$ in einem inerten Lösungsmittel aufschlemmt und anschließend Aluminiumtrialkyl zugibt. Geeignet sind aliphatische, cycloaliphatische und aromatische Lösungsmittel. Als Beispiele seien gennant : Pentan, Hexan, Heptan, Cyclohexan, Benzol und Toluol. Die Menge des zugesetzten Aluminiumtrialkyls kann in weiten Grenzen variiert werden. Das Molverhältnis $AlR^1_3$ zu $M(RCO_2)_3$ beträgt bevorzugt : 0,5 : 1 bis 50 : 1, besonders bevorzugt 1 : 1 bis 25 : 1. Im allgemeinen genügt schon ein Molverhältnis $AlR^2_3 : M(RCO_2)_3$ von 1 : 1 bis 5 : 1, ohne daß die guten Eigenschaften des Katalysators vermindert werden.

Die Temperatur, bei der die Umsetzung zur Katalysatorkomponente A erfolgt, kann ebenfalls in einem weiten Bereich schwanken, besonders bevorzugt zwischen —30 und + 50 °C, insbesondere zwischen 0 und 40 °C. Er wird in der Regel von der Schmelz- bzw. Siedetemperatur des Lösungsmittels begrenzt. Die Löslichkeit wird, wie zu erwarten, bei höheren Temperaturen günstiger.

Die Zeit, die zur Bildung der Katalysatorkomponente A erforderlich ist, ist für eine bestimmte Verbindung $M(RCO_2)_3$ abhängig von der Art und Menge des verwendeten Lösungsmittels, von der Art und Menge des verwendeten Aluminiumalkyls und von der Temperatur. Eine genaue Angabe ist daher nicht möglich. Wie aus den Beispielen zu ersehen ist, erfolgt die Auflösung jedoch im allgemeinen innerhalb kurzer Zeit.

Die Eigenschaften des Katalysators werden beeinflußt durch das Verhältnis der Summe aller Aluminiumalkylverbindungen $AlR^1_3$, $AlR^2_3$ und $HAlR^2_2$ zur $M(RCO_2)_3$ ; da bei der Herstellung der Komponente A eine größere Menge eingesetzt werden kann als zur Bildung des löslichen Reaktionsgemisches A notwendig ist.

Das Molverhältnis, in dem die Katalysatorkomponenten angewendet werden, kann in weiten Grenzen variiert werden. Das Molverhältnis $M(RCO_2)_3$ zur Summe von $AlR^1_3$ und $AlR^2_3$ und $HAlR^2_2$ beträgt bevorzugt 1 : 10 bis 1 : 80 und besonders bevorzugt 1 : 10 bis 1 : 60. Das Molverhältnis der Komponente A, bezogen auf eingesetztes $M(RCO_2)_3$, zur Komponente C beträgt bevorzugt 1 : 0,5 bis 1 : 10.

Der Katalysator wird hergestellt, indem man die Lösungen der Komponenten A, B und C in beliebiger Reihenfolge unter Rühren in einem geeineten inerten Lösungsmittel vermischt. Die Herstellung des Katalysators erfolgt z. B. unter Verwendung des Lösungsmittels, welches für die Polymerisation des Diens eingesetzt wird. Die Temperatur, bei der die Herstellung des Katalysators erfolgt, kann in einem weiten Bereich schwanken. Er wird in der Regel von der Schmelz- bzw. Siedetemperatur des verwendeten Lösungsmittels begrenzt. Geeignet sind z. B. Temperaturen zwischen —30 und + 80 °C. Die Herstellung des Katalysators kann gesondert oder bevorzugt durch Zugabe und Mischen der Katalysatorkomponenten A, B und C zum Polymerisationsansatz erfolgen. Die komponenten A und B oder B und C können auch vor Zugabe zum Polymerisationsansatz d. h. vor der Reaktion mit der Komponenten C bzw. A gemischt werden. Es is nicht wesentlich, ob das zu polymerisierende Dien vor oder nach den Katalysatorkomponenten zugefügt wird, oder ob das das Dien zwischen der Zugabe von zwei Katalysatorkomponenten zugefügt wird. Geeignete Reihenfolgen bei der Herstellung des Katalysators durch Einmischen der Komponenten in den Polymerisationsansatz sind z. B. :

1. Lösungsmittel,
2. Dien,
3. Komponente A,
4. Komponente B,
5. Komponente C oder
1. Lösungsmittel,
2. Komponente B,
3. Dien,
4. Komponente A,
5. Komponente C oder
1. Lösungsmittel,
2. Komponente B,
3. Komponente C,
4. Komponente A,
5. Dien

Die Katalysatorkomponenten A, B und C können auch gleichzeitig zum Lösungsmittel-Monomer-Gemisch gegeben werden.

Der Katalysator besitzt eine hohe Aktivität, und es genügen daher sehr geringe Mengen, um eine katalytische Wirkung zu erzielen. Auf 100 g Monomere werden im allgemeinen 0,01 bis 3 mMol, bevorzugt 0,01 bis 0,5 mMol, das Katalysators, bezogen auf die bei der Herstellung der Komponente A eingesetzte Verbindung M(RCO$_2$)$_3$, eingesetzt.

Die Polymerisation wird in organischen Lösungsmitteln ausgeführt. Diese Lösungsmittel müssen inert gegenüber dem verwendeten Katalysatorsystem sein. Geeignet sind z. B. aromatische, aliphatische und cycloaliphatische Kohlenwasserstoffe wie Benzol, Toluol, Pentan, n-Hexan, iso-Hexan, Heptan und Cyclohexan.

Die Polymerisation mit dem erfindungsgemäßen Katalysator kann sowohl kontinuierlich als auch diskontinuierlich durchgeführt werden.

Die Polymerisation wird bei einer Temperatur zwischen 0 und 120 °C, bevorzugt zwischen 40 und 100 °C, durchgeführt.

Als konjugierte Diene seien Butadien, Isopren, Pentadien-1,3 und 2,3-Dimethylbutadien, insbesondere Butadien, genannt.

In einer üblichen Ausführungsform werden die Komponenten A, B und C einer Mischung von 100 Gew.-Teilen Lösungsmittel mit 5 bis 40 Gew.-Teilen, bevorzugt 8 bis 30 Gew.-Teilen Butadien zugesetzt. Die Polymerisation springt, erkennbar an der Wärmeentwicklung, sofort an. Bei einer Katalysatordosierung von 0,06 mMol, bezogen auf die eingesetzte Verbindung M(RCO$_2$)$_3$ bei Herstellung der Komponente A, und einer Temperatur von va. 90 °C erreicht man nach 30 Minuten bis 5 Stunden Umsätze von mehr als 90 %.

Nach Erreichen des gewünschten Umsatzes wird der Katalysator durch Zusatz geringer Mengen beispielsweise an Wasser, Carbonsäuren oder Alkoholen desaktiviert.

Der Polymerlösung werden vor der Aufarbeitung übliche Stabilisatoren in üblichen Mengen zugesetzt. Als Stabilisatoren werden z. B. sterisch gehinderte Phenole oder aromatische Amine wie z. B. 2,6-Di-tert.-butyl-4-methyl-phenol verwendet.

Die Isolierung der Polymeren erfolgt durch Eindampfen der Polymerlösung, durch Fällen mit einem Nichtlösungsmittel wie beispielsweise Methanol, Äthanol, Aceton oder bevorzugt durch Wasserdampfdestillation des Lösungsmittels. Die Trocknung erfolgt nach den üblichen Verfahren, z. B. im Trockenschrank oder in einem Schneckentrockner.

Das beispielsweise erfindungsgemäß hergestellte Polybutadien weist einen Anteil an cis 1,4-Doppelbindungen von 80 bis 99 % auf. Es zeigt gegenüber den bekannten Handelsprodukten deutlich verbesserte Konfektionsklebrigkeit. Bevorzugte Einsatzgebiete sind Autoreifen und technische Gummiartikel.

Die Erfindung wird anhand der folgenden Beispiele näher erläutert. Wenn nicht anders angegeben, bedeuten die Prozentangaben Gewichtsprozente.

Beispiel 1

0,3 mMol Neodymoctanoat, Nd(C$_7$H$_{15}$CO$_2$)$_3$, wurden mit 9,8 ml Cyclohexan versetzt und 1 1/2 Stunden bei Raumtemperatur gerührt. Die Substanz quoll auf, ohne in dieser Zeit in Lösung zu gehen. Dann wurden 0,2 ml einer Cyclohexanlösung, welche 1,5 mMol Triäthylaluminium enthielt, zugegeben. Nach einer Minute bildete sich eine klare Lösung.

Beispiel 2

1 mMol Nd(C$_7$H$_{15}$CO$_2$)$_3$ wurde mit 9,3 ml Cyclohexan versetzt und 90 Minuten bei 23 °C gerührt. Die Substanz löste sich während dieser Zeit nicht.

Danach wurden 0,7 ml einer Cyclohexanlösung, welche 5 mMol Al(C$_2$H$_5$)$_3$ enthielt, zugegeben. Nach 15 Minuten war der gesamte Feststoff gelöst.

Beispiel 3 bis 6

Jeweils 0,5 mMol Didymtris(diäthylacetat), Didymcyclohexancarboxylat, Didymnaphthenat bzw. Didymoleat wurden mit 9,6 ml Cyclohexan versetzt. Didym steht für ein Gemisch von Elementen der Seltenen Erden der Zusammensetzung 72 % Neodym, 20 % Lanthan und 8 % Praseoym. Die Mischungen wurden 1 Stunde bei 25 °C gerührt. Keine der Didymverbindungen ging dabei in Lösung.

Danach wurden jedem Ansatz 0,4 ml einer Cyclohexanlösung, welche 2,5 mMol Al(C$_2$H$_5$)$_3$ enthielt, zugefügt. Nach 15 Minuten waren alle Substanzen völlig gelöst.

Beispiel 7

Die Polymerisation wurde in einem mit N$_2$ gespülten Rührgefäß vorgenommen, in das zunächst eine 12 %ige Lösung von Butadien in Cyclohexan eingefüllt wurde.

Dann wurden, bezogen auf 100 g Monomeres, 0,1 mMol Di(C$_7$H$_{15}$CO$_2$)$_3$ · 15 Al(C$_2$H$_5$)$_3$ (Reaktionsprodukt aus Didymtris-2-äthyl-hexanoat und der 15-fachen molaren Menge Triäthylaluminium) zugegeben. Didym (Di) steht für ein Gemisch von Elementen der Seitenen Erden der Zusammensetzung 72 % Neodym, 20 % Lanthan und 8 % Praseodym. Das Reaktionsprodukt wurde als 0,04 molare Lösung in Cyclohexan eingesetzt. Anschließend wurden dem Polymerisationsansatz 3,0 mMol Triäthylaluminium und 0,08 mMol Aluminiumtribromid, jeweils bezogen auf 100 g Butadien, als Lösungen in Cyclohexan zugefügt. Das Reaktionsgefäß war von einem Mantel umgeben, durch den Wasser mit einer Temperatur zwischen 20 und 90 °C geleitet werden konnte. Damit wurde die Polymerisationstemperatur bei 56 °C gehalten.

Nach 5 Stunden wurde die Reaktion durch Zusatz von Äthanol abgestoppt. Nach Zusatz von 0,3 % 2,6-Di-tert.-butyl-4-methylphenol (bezogen auf festes Polymeres) als Stabilisator wurde das Polybutadien durch Entfernen des Cyclohexans mittels einer Wasserdampfdestillation gewonnen.

Das Polymere wurde bei 50 °C in Vakuum getrocknet. Die Ausbeute betrug 95 %, bezogen auf das eingesetzte Monomere.

IR-Analyse : 1,4 cis = 95,0 % ; 1,4 trans = 4,4 % ; 1,2 = 0,6.

Das Polymere hatte folgende Eigenschaften :

Inhärente Viskosität : 3,60 dl/g. Gelgehalt kleiner 1 %.

Mooney Vikosität (ML-4', 100º) : 46.

Defohärte (80 °C) : 300 p.

Defoelastizität (80 °C) : 11 %.

Das Polymere wurde auf der Walze gemischt und anschließend vulkanisiert. Die Mischung und das Vulkanisat wurden einer vergleichenden Prüfung mit einem handelsüblichen Polybutadien Typ, erhalten mit einem Titan-Katalysator, unterzogen.

Es wurde folgende Mischungsrezeptur verwendet :

| | Gew.-Tl. |
|---|---|
| Polybutadien | 100 |
| Ruß (N 330) | 50 |
| Aromatisches Öl | 5 |
| ZnO | 3 |
| Stearinsäure | 1,5 |
| N-Isopropyl-N'-phenyl-p-phenylendiamin | 1,0 |
| Phenyl-α-naphthylamin | 1,0 |
| Naphthenisches Öl | 4,0 |
| Benzothiazyl-2-sulphen-morpholid | 1,0 |
| Schwefel | 1,5 |

Bei der Mischungsherstellung auf der Walze traten bei dem zum Vergleich herangezogenen Handelsprodukt, insbesondere bei Temperaturen über 40 °C, deutliche Mängel in der Verarbeitbarkeit auf.

Dagegen war das erfindungsgemäß hergestellte Polybutadien auch bei Temperaturen bis 70 °C hervorragend verarbeitbar. Es bildete sofort ein glattes Walzfell, das weder Löcher noch Risse aufwies. Auch während und nach der Zugabe der Mischungskomponenten bleib das Fell glatt und geschlossen. Es trat kein Abheben von der Walze auf.

Im Gegensatz zu den bekannten Handelsprodukten zeichnet sich das mit dem erfindungsgemäßen Katalysator hergestellte Polybutadien durch eine hervorragende Konfektionsklebrigkeit auf.

## Patentansprüche

1. Verfahren zur Polymerisation von konjugierten Dienen in Lösung, dadurch gekennzeichnet, daß ein Katalysator, bestehend aus

A) einem kohlenwasserstofflöslichen Reaktionsgemisch der Umsetzung eines Carboxylates der Seltenen Erden $M(RCO_2)_3$ mit einem Aluminiumtrialkyl $AlR^1_3$,

B) einem Aluminiumtrialkyl $AlR^2_3$, und/oder einem Alkylaluminiumhydrid $HAlR^2_2$,

C) einer Lewissäure

wobei

M ein dreiwertiges Element der Seltenen Erden mit den Ordnungszahlen 57 bis 71,

R einen gesättigten oder ungesättigten geradkettigen oder verzweigten Alkylrest mit 1 bis 20 C-Atomen, der einfach oder mehrfach mit Cycloalkyl mit 5 bis 7 C-Atomen und/oder Phenyl substituiert sein kann, wobei die Carboxylgruppe an ein primäres, sekundäres oder tertiäres C-Atom gebunden ist, einen Cycloalkylrest mit 5 bis 7 Ring-C-Atomen, der gegebenenfalls einfach oder mehrfach mit Alkylgruppen mit 1 bis 5 C-Atomen substituiert ist oder einen aromatischen Rest mit 6 bis 10 Ring-C-Atomen, der einfach oder mehrfach mit Alkylgruppen mit 1 bis 5 C-Atomen substituiert sein kann, und

$R^1$ und $R^2$ gleich oder verschieden einen geradkettigen oder verzweigten Alkylrest mit 1 bis 10 C-Atomen bedeuten und das Molverhältnis $M(RCO_2)_3$ zur Summe von $AlR^1_3$, $AlR^2_3$ und $HAlR^2_2$ 1 : 2 bis 1 : 100 sowie das Molverhältnis der Komponente A, bezogen auf $M(RCO_2)_3$, zur Komponente C 1 : 0,4 bis 1 : 15 betragen, verwendet wird.

2. Verfahren nach Anspruch 1, dadurch gekennzeichnet, daß M Lanthan, Cer, Praseodym oder Neodym darstellt.

3. Verfahren nach Anspruch 1, dadurch gekennzeichnet, daß M ein Gemisch von Elementen der Seltenen Erden, welches mindestens eines der Elemente Lanthan, Cer, Praseodym oder Neodym zu wenigstens 10 % enthält, darstellt.

4. Verfahren nach Ansprüchen 1 bis 3, dadurch gekennzeichnet, daß zur Herstellung der Komponente A die Verbindungen $M(RCO_2)_3$ und $AlR^1_3$ in einem inerten Lösungsmittel im Molverhältnis von 1 : 0,5 bis 1 : 50 eingesetzt werden.

## Claims

1. Process for the polymerisation of conjugated dienes in solution, characterised in that a catalyst consisting of

A) a hydrocarbon-soluble reaction mixture from the reaction of a rare earth carboxylate $M(RCO_2)_3$ with an aluminium trialkyl $AlR^1_3$,

B) an aluminium trialkyl $AlR^2_3$, and/or an alkyl aluminium hydride $HAlR^2_2$ and

C) a Lewis acid,

is used, wherein

M denotes a trivalent rare earth element with an atomic number of 57 to 71,

R denotes a saturated or unsaturated straight-chain or branched alkyl radical with 1 to 20 C atoms which can be mono- or polysubstituted with cycloalkyl with 5 to 7 C atoms and/or phenyl, the carboxyl group being bonded to a primary, secondary or tertiary C atom, a cycloalkyl radical with 5 to 7 ring C atoms which is optionally mono-or polysubstituted with alkyl groups with 1 to 5 C atoms or an aromatic radical with 6 to 10 ring C atoms which can be mono- or polysubstituted with alkyl groups with 1 to 5 C atoms, and

$R^1$ and $R^2$ are identical or different and denote a straight-chain or branched alkyl radical with 1 to 10 C atoms and the molar ratio of $M(RCO_2)_3$ to the sum of $AlR^1_3$, $AlR^2_3$ and $HAlR^2_2$ is $1:2$ to $1:100$ and the molar ratio of component A, based on $M(RCO_2)_3$, to component C is $1:0.4$ to $1:15$.

2. Process according to Claim 1, characterised in that M represents lanthanum, cerium, praseodymium or neodymium.

3. Process according to Claim 1, characterised in that M represents a mixture of rare earth elements which contains at least one of the elements lanthanum, cerium, praseodymium or neodymium in a quantity of at least 10 %.

4. Process according to Claims 1 to 3, characterised in that, for the preparation of component A, the compounds $M(RCO_2)_3$ and $AlR^1_3$ are used in an inert solvent in a molar ratio of $1:0.5$ to $1:50$.

**Revendications**

1. Procédé de polymérisation de diènes conjugués en solution, caractérisé en ce qu'on utilise un catalyseur consistant en

A) un mélange de réaction soluble dans les hydrocarbures de la réaction d'un carboxylate des terres rares $M(RCO_2)_3$ avec un aluminium-trialcoyle $AlR^1_3$,

B) un aluminium-trialcoyle $AlR^2_3$ et/ou un hydrure d'alcoyl-aluminium $HAlR^2_2$,

C) un acide de Lewis,

M étant un élément trivalent des terres rares ayant des numéros atomiques de 57 à 71,

R un radical alcoyle saturé ou insaturé, à chaîne droite ou ramifiée ayant 1 à 20 atomes de carbone qui peut être substitué une ou plusieurs fois par un cycloalcoyle ayant 5 à 7 atomes de carbone et/ou un phényle, le groupe carboxyle étant relié à un atome de carbone primaire, secondaire ou tertiaire, un radical cycloalcoyle ayant 5 à 7 atomes de carbone nucléaires qui est substitué éventuellement une ou plusieurs fois par des groupes alcoyle ayant 1 à 5 atomes de carbone ou un radical aromatique ayant 6 à 10 atomes de carbone nucléaires qui peut être substitué une ou plusieurs fois par des groupes alcoyle ayant 1 à 5 atomes de carbone, et

$R^1$ et $R^2$, identiques ou différents, sont un radical alcoyle à chaîne droite ou ramifiée ayant 1 à 10 atomes de carbone, le rapport molaire de $M(RCO_2)_3$ envers la somme de $AlR^1_3$, $AlR^2_3$ et $HAlR^2_2$ étant de $1:2$ à $1:100$, de même que le rapport molaire du composant A, rapporté à $M(RCO_2)_3$, envers le composant C s'élevant à $1:0,4$ à $1:15$.

2. Procédé selon la revendication 1, caractérisé en ce que M représente du lanthane, du cérium, du praséodyme ou du néodyme.

3. Procédé selon la revendication 1, caractérisé en ce que M est un mélange d'éléments des terres rares qui contient au moins un des éléments lanthane, cérium, praséodyme ou néodyme à raison d'au moins 10 %.

4. Procédé selon les revendications 1 à 3, caractérisé en ce que pour la préparation du composant A on utilise les composés $M(RCO_2)_3$ et $AlR^1_3$ dans un solvant inerte dans le rapport molaire de $1:0,5$ à $1:50$.